# FASCICULE DE BREVET EUROPEEN

(11) **EP 2 986 887 B1**
(45) Date de publication et mention de la délivrance du brevet: **18.09.2019**
(21) Numéro de dépôt: 14720676.7
(22) Date de dépôt: 10.04.2014
(51) Int. Cl.: F17C 7/02

(54) **PROCÉDÉ ET INSTALLATION D'ALIMENTATION D'AU MOINS UN POSTE D'USINAGE EN LIQUIDE CRYOGÉNIQUE SOUS-REFROIDI**
VERFAHREN UND ANLAGE ZUR VERSORGUNG MINDESTENS EINER BEARBEITUNGSSTATION MIT EINER UNTERKÜHLTEN KRYOGENEN FLÜSSIGKEIT
METHOD AND FACILITY FOR SUPPLYING AT LEAST ONE MACHINING STATION WITH SUBCOOLED CRYOGENIC LIQUID

(30) Priorité: 18.04.2013 FR 1353518
(43) Date de publication de la demande: 24.02.2016
(73) Titulaire: L'Air Liquide Société Anonyme pour l'Etude et l'Exploitation des Procédés Georges Claude, 75007 Paris (FR)
(72) Inventeur: KOWALEWSKI, Pierre, 75016 Paris (FR)
(74) Mandataire: Mellul-Bendelac, Sylvie Lisette
(86) Numéro de dépôt international: PCT/FR2014/050862
(87) Numéro de publication internationale: WO 2014/170583

(56) Documents cités:
- EP-A1- 2 565 514
- EP-A2- 0 038 673
- EP-A2- 1 818 633
- CA-A1- 2 128 187
- DE-A1- 2 929 709
- FR-A1- 2 599 119

## Description

La présente invention concerne l'alimentation d'un poste utilisateur en liquide cryogénique, en particulier en liquide cryogénique sous-refroidi, elle s'intéresse tout particulièrement à l'alimentation des postes réalisant des opérations d'usinage (usinage, coupage....)

On dispose d'un art antérieur très volumineux concernant l'alimentation de telles machines d'usinage à l'aide d'une fluide de refroidissement (de l'outil de coupe, de la zone de coupe etc...) et notamment à l'aide d'un cryogène liquide tel l'azote liquide. Le cryogène dans de tels cas est utilisé non seulement pour refroidir la zone mais également pour un effet « lubrifiant » des outils de coupe.

Le document CA-2128187 illustre pour sa part un exemple d'alimentation en oxygène liquide d'un poste de traitement de métal fondu.

Un fluide cryogénique s'entend communément comme un fluide qui, à la pression atmosphérique, est liquide à une température très inférieure à 0°C.

On alimente traditionnellement en un tel liquide cryogénique un équipement consommateur (par exemple en azote liquide), quel que soit son type, à partir d'un réservoir de fluide cryogénique raccordé à l'équipement consommateur de ce fluide, lequel réservoir contient, sous une pression de stockage supérieure à la pression atmosphérique, un fluide cryogénique en phase liquide au fond du réservoir et en phase gazeuse au sommet du réservoir, ce réservoir étant adapté pour d'une part alimenter l'équipement consommateur en liquide qui est soutiré depuis le fond du réservoir, et d'autre part pour être approvisionné depuis l'extérieur en fluide.

On utilise le plus couramment dans l'industrie des réservoirs dits « à basse pression de stockage », c'est-à-dire dont la pression maximale atteinte au sommet du réservoir est en général inférieure à environ 4 bars absolus, mais on trouve également, selon les applications visées des stockages dits moyenne pression montant jusqu'à 15 bar voire des stockages dits haute pression montant jusqu'à 30 bars.

La pression de stockage du réservoir étant supérieure à la pression atmosphérique, l'ouverture d'une vanne placée sur la conduite de raccordement du réservoir à l'équipement consommateur (par exemple une machine d'usinage) provoque le déplacement du liquide de son point de puisage à son point d'utilisation, sans moyen d'entraînement forcé et malgré les pertes de charge sur la ligne (vannes, portions coudées etc...).

Pour s'assurer que l'entraînement du liquide cryogénique est toujours effectif quel que soit le niveau de liquide dans le réservoir, on régule classiquement la pression du gaz au sommet du réservoir de façon à ce que cette pression reste sensiblement égale à une valeur prédéterminée, fixe, par exemple de l'ordre de 2 à 4 bars.

Cependant, la pression du liquide au fond du réservoir varie en fonction de la hauteur du liquide à l'intérieur du réservoir, de sorte que, au fur et à mesure que le niveau de liquide baisse, la pression du liquide soutiré baisse et tend à se rapprocher de la pression du gaz au sommet. Par exemple, dans le cas de l'azote, une hauteur de liquide de 10 mètres environ implique un différentiel de pression de l'ordre de 0,6 bar entre la pression de gaz au sommet et la pression de liquide au fond du réservoir, au niveau du puisage.

Cette variation de pression du liquide au point de puisage conduit nécessairement à une variation du débit de liquide soutiré, entraînant des perturbations de fonctionnement pour l'équipement consommateur situé en aval. Un effet symétrique se produit lors du re-approvisionnement du réservoir en fluide.

Pour des raisons bien connues de meilleure « qualité cryogénique » en terme de frigories disponibles, la littérature et ces industries utilisatrices de cryogènes se sont intéressées aux moyens d'alimenter ces postes utilisateurs en liquide franc ou sensiblement franc ou en liquide sous-refroidi, c'est-à-dire en liquide à pression abaissée, et à température plus basse que lorsqu'il était à pression plus élevée.

En effet, considérons l'exemple de l'usinage, plus la pression de pulvérisation dans la zone d'usinage est importante, meilleurs sont les coefficients d'échange thermique. Or, quand le cryogène, par exemple l'azote liquide, est pulvérisé, il se crée du gaz -dû à sa détente- en sortie de buse de pulvérisation. La quantité de gaz généré est directement proportionnelle à la température de l'azote liquide et à sa pression en amont de la buse. On comprend donc l'intérêt de s'attacher à disposer d'un liquide sous-refroidi.

Certains travaux ont recommandé l'emploi de moyens de séparation de phases (dégazage) sur la ligne reliant le réservoir à l'équipement consommateur, on pourra par exemple se reporter au document EP-2 347 855.

D'autres solutions ont proposé de coupler deux réservoirs et de les utiliser alternativement après remplissage et dépressurisation. Les inconvénients de cette solution sont bien évidemment la très forte manipulation induite et la mobilisation de deux réservoirs.

Une autre solution est d'insérer un échangeur thermique (par exemple à plaques) juste en amont du point d'utilisation : dans une des voies de l'échangeur (circuit principal) circule l'azote liquide à sous refroidir (typiquement à l'origine à 3 bars et température voisine de -185 °C), dans une autre voie de l'échangeur circule un azote dépressurisé, typiquement à une pression voisine de 1 bar et à basse température, voisine de -196 °C. C'est l'échange entre ces deux voies, à co-courant ou contre courant, qui va permettre de sous-refroidir l'azote du circuit principal. Mais le contrôle de la température est ici difficile à maitriser et à stabiliser, en particulier lorsque l'équipement consommateur en aval fonctionne en discontinu obligeant l'échangeur à passer par des phases de réchauffement, remise en froid etc...

On pourra également consulter le document WO2004/00 5791 au nom de la Demanderesse, qui recommande de faire varier la pression du gaz au sommet du réservoir selon l'état de fonctionnement de ce réservoir (phase de consommation de l'installation utilisatrice en aval, phase d'attente, ou phase d'alimentation du réservoir en liquide cryogénique), et qui justement préconise selon un de ses modes de réalisation, des mises à l'air du réservoir durant les périodes d'attente. En d'autres termes, lorsque le réservoir n'est pas sollicité en soutirage et ne le sera pas a priori pendant une durée significative, par exemple de plusieurs heures (par exemple la nuit), une unité de contrôle commande l'ouverture d'une vanne de mise à l'air de la partie haute du réservoir. La pression de gaz au sommet du réservoir passe alors d'une valeur de stockage à une valeur sensiblement égale à la pression atmosphérique (pression résiduelle de quelques centaines de grammes). Ainsi, en abaissant de la sorte la pression de stockage de l'azote, la variation enthalpique de ce dernier tend à augmenter, ce qui revient à disposer d'un fluide de température plus basse que lorsqu'il était sous pression. Le fluide ainsi stocké durant ces périodes de non-utilisation du réservoir présente donc une température plus basse qu'à l'ordinaire, garantissant une meilleure qualité cryogénique en terme de frigories disponibles. Et de fait, une remise en pression rapide - en utilisant par exemple son propre réchauffeur atmosphérique ou autre- permet d'utiliser le liquide déstabilisé (sous refroidi).

Néanmoins cette solution n'est pas sans inconvénients, cette mise à l'air entraîne nécessairement des pertes, et par ailleurs le paradoxe de cette procédure réside dans le besoin de re-pressuriser pour pouvoir utiliser l'azote, donc de faire entrer de la chaleur. L'expérience de cette solution a notamment démontré une vaporisation de 4 à 9% du volume stocké. Cette vaporisation n'étant pas valorisée, le coût impacte directement le site utilisateur. On en déduit en résumé deux inconvénients majeurs de cette solution de mise à l'air :
1) l'utilisation d'azote non valorisable pour la remise en pression.
2) L'entrée d'un gaz chaud dans le stockage pour la dépressurisation et la création de pont thermique.

On a également pensé à alimenter le poste utilisateur, par exemple d'usinage, en direct à partir d'un stockage de cryogène à moyenne ou haute pression, mais on constate alors la création, en sortie de buse de pulvérisation, d'une grande quantité de gaz, gaz qui diminue les échanges thermiques.

On peut enfin penser à alimenter la machine à partir d'un stockage basse pression et au travers d'une pompe, mais on connaît les difficultés liées à la manipulation de telles pompes, auxquelles s'ajoute l'impossibilité d'alimenter plusieurs postes d'usinage d'un même site à des pressions différentes et à faible débit.

Les travaux menés à bien par la Demanderesse ont démontré que pour de telles applications d'usinage, ces solutions antérieures, qui peuvent par exemple donner satisfaction dans d'autres industries telles l'alimentaire, ne donnent pas ici pleinement satisfaction, et ne permettent notamment pas d'alimenter plusieurs postes d'usinage en un liquide sous-refroidi, à des pressions différentes, à partir d'un stockage moyenne ou haute pression (par exemple entre 15 bars et 30 bars), par exemple d'alimenter plusieurs postes d'usinage en azote liquide sous-refroidi, à des pressions différentes à -196°C, à partir d'un stockage amont à 15 bars.

Dans ce contexte, l'un des objectifs de la présente invention est de proposer une nouvelle installation d'alimentation d'un site utilisateur de type usinage en liquide cryogénique franc ou sous-refroidi, évitant les inconvénients de l'art antérieur et permettant notamment de maitriser la pression d'alimentation de plusieurs postes d'usinage simultanément.

Pour cela, on peut définir alors un procédé d'alimentation en liquide cryogénique sous-refroidi d'au moins un poste (P, P1, P2...) réalisant des opérations d'usinage, à partir d'un réservoir de stockage, réservoir qui contient, sous une pression de stockage supérieure à la pression atmosphérique, le fluide cryogénique en phase liquide au fond du réservoir et en phase gazeuse au sommet du réservoir, ledit réservoir étant adapté pour alimenter le ou lesdits poste(s) en liquide soutiré à partir du fond du réservoir, ainsi que pour être approvisionné depuis l'extérieur en fluide, se caractérisant en ce que :
- on dispose d'au moins un échangeur thermique, immergé dans au moins un bain dudit liquide cryogénique,
- on procède au contrôle du niveau du ou de chaque bain à un niveau déterminé ;
- on fait transiter par le ou chaque échangeur thermique du liquide cryogénique en provenance du réservoir de stockage avant son arrivée audit(s) poste(s) d'usinage ;
- on régule la pression du liquide cryogénique issu du ou de chaque échangeur immergé avant son arrivée audit poste d'usinage lui correspondant.

L'invention concerne également une installation d'alimentation en liquide cryogénique sous-refroidi d'au moins un poste (P, P1, P2...) réalisant des opérations d'usinage, comportant un réservoir de stockage, réservoir qui contient, sous une pression de stockage supérieure à la pression atmosphérique, le fluide cryogénique en phase liquide au fond du réservoir et en phase gazeuse au sommet du réservoir, ledit réservoir étant adapté pour alimenter ledit poste (P, P1, P2...) en liquide soutiré à partir du fond du réservoir, ainsi que pour être approvisionné depuis l'extérieur en fluide, se caractérisant en ce qu'elle comprend :
- au moins un échangeur thermique, immergé dans au moins un bain dudit liquide cryogénique,
- des moyens de contrôle du niveau du ou de chaque bain à un niveau déterminé ;
- un système de canalisations apte à faire transiter par le ou chaque échangeur thermique du liquide cryogénique en provenance du réservoir de stockage avant son arrivée audit (s) poste(s) d'usinage ;
- des moyens permettant de réguler la pression du liquide cryogénique issu du ou de chaque échangeur immergé avant son arrivée audit poste d'usinage lui correspondant.

L'installation comprend une vanne située en amont de l'arrivée de liquide dans chacun desdits échangeurs, chaque vanne étant en communication de fluide avec ledit réservoir, et lesdits moyens permettant de réguler la pression du liquide cryogénique issu du ou de chaque échangeur immergé avant son arrivée audit poste d'usinage lui correspondant comprennent une sonde de pression dédiée, positionnée entre la sortie de chaque échangeur et ledit poste d'usinage associé à l'échangeur considéré, et configurée pour fournir l'information qu'elle mesure à ladite vanne située en amont de l'arrivée de liquide dans l'échangeur considéré.

Selon un des modes de mise en oeuvre de l'invention, l'installation comprend une ou plusieurs lignes de mise en froid, une ligne de mise en froid étant dédiée à chacun desdits ensembles de l'installation constitués d'un bain et d'un échangeur, chaque ligne de mise en froid étant connectée en sa partie amont à une canalisation de sortie de l'échangeur du bain qui lui est associé, et en sa partie aval à une canalisation d'alimentation du bain considéré en liquide cryogénique à partir dudit réservoir ou directement sur la partie haute d'un conteneur contenant le bain considéré, chaque ligne de mise en froid étant munie d'une sonde de température et d'une vanne de régulation du débit qui y circule.

Selon un mode avantageux de mise en oeuvre de l'invention, on met en oeuvre un purgeur, sur la portion de ligne entre la vanne d'arrivée de cryogène dans l'échangeur et l'échangeur, ou sur tout ou partie des portions de ligne entre une vanne d'arrivée de cryogène dans l'échangeur considéré et cet échangeur.

Cette mise en oeuvre se révèle en effet extrêmement avantageuse, ceci pour les raisons suivantes, liées notamment au fait de pouvoir diminuer la taille de l'échangeur d'une part et au fait d'optimiser les échanges thermiques d'autre part :
- lors de la détente du fluide cryogénique, il se crée spontanément du gaz, lié à sa température d'équilibre (courbe liquide/vapeur). A titre illustratif, quand on détend de l'azote liquide sous pression, il se crée une grande quantité de gaz en volume : par exemple en détendant de 15 bars à 7 bars, on dispose de 30% de gaz en masse mais 10 fois plus de gaz en volume, i.e 7,5 m³ de gaz pour 0.7m³ de liquide. En supprimant ou diminuant ce volume gazeux à recondenser, on optimise les diamètres de tuyauteries et les longueurs.
- on a d'autre part déjà commenté plus haut l'avantage de diminuer le taux de diphasique en terme d'efficacité thermique.

Un tel purgeur permet donc de supprimer un volume gazeux à recondenser.

On notera par ailleurs que la consommation de cryogène liquide, par exemple d'azote liquide, sera identique avec ou sans purgeur, le bain de liquide étant à l'air libre la partie non condensée ne vient pas en surplus de la consommation totale.

D'autres caractéristiques et avantages ressortiront de la description suivante, d'exemples de modes de mise en oeuvre de l'invention, faite notamment en référence aux figures annexées :
- La figure 1 illustre un des modes de réalisation de l'invention alimentant un unique poste d'usinage.
- la figure 2 illustre un mode de réalisation de l'invention alimentant plusieurs postes d'usinage simultanément.
- la figure 3 illustre un mode de réalisation de l'invention qui met en oeuvre un purgeur en aval de la vanne de régulation 1 (entre la vanne et l'échangeur immergé dans le bain 20).

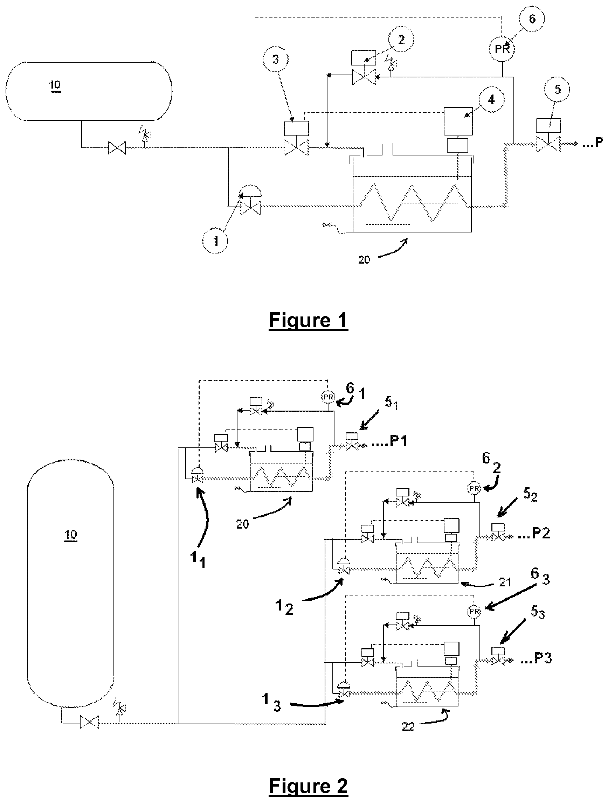

On reconnaît alors sur la figure 1 les éléments suivants :
- le mode de réalisation représenté ici est utilisé pour alimenter en azote liquide un unique poste d'usinage P, à partir d'un réservoir 10 de stockage d'azote liquide ;
- le réservoir 10 contient, sous une pression de stockage de 15 bars, le fluide cryogénique en phase liquide au fond du réservoir et en phase gazeuse au sommet du réservoir, le réservoir est adapté et équipé des canalisations nécessaires et bien connues de l'homme du métier adapté pour alimenter ledit poste (P) en liquide soutiré à partir du fond du réservoir 10, ainsi que pour être approvisionné depuis l'extérieur en fluide ;
- un bain 20 dudit liquide cryogénique (ici de l'azote liquide), dans lequel est immergé un échangeur thermique ;
- des moyens de contrôle du niveau du bain à un niveau déterminé, ici constitués d'une vanne 3 et d'un détecteur de niveau 4. On comprend à la lecture de la figure que la mesure de niveau via le détecteur 4 permet de retroagir sur la vanne 3 d'arrivée de cryogène dans le bain pour selon le cas arrêter cet approvisionnement ou le poursuivre ou encore le démarrer, on ne s'attardera donc pas d'avantage sur cet aspect ;
- la présence de moyens de régulation de la pression du liquide cryogénique issu de l'échangeur immergé avant son arrivée audit poste d'usinage P, en l'occurrence ici d'une sonde de pression 6 apte à fournir l'information qu'elle mesure à une vanne 1 située en amont de l'arrivée de liquide dans l'échangeur immergé, permet de réguler la pression parvenant au Poste P en aval à une pression souhaitée, cette pression est dès lors connue, stable, sans nécessité de mise en oeuvre d'autres moyens, et notamment sans nécessité d'une pompe ;
- on note également la présence sur cette figure 1 d'une ligne de mise en froid ou mise en régime de l'installation : la vanne 5 étant fermée, une fois le bain 20 amené au niveau de liquide requis (vanne 3, sonde 4), on admet dans l'échangeur du liquide via la vanne 1, puis retour sur la ligne 6/2, et au bout dans le bac sous-refroidisseur.

Avantageusement, l'ouverture de la vanne 2 peut être temporisée, et associée à une prise de température entre la sortie de l'échangeur et la vanne 5, fournissant une mise en froid et un maintien en froid de la portion de canalisation comprenant l'échangeur jusqu'à la vanne 5 et une disponibilité quasi instantanée du cryogène au poste utilisateur.

On comprend dès lors bien la constitution de l'installation de la figure 2, qui illustre un mode de réalisation de l'invention alimentant plusieurs postes d'usinage P1, P2, P3 ....simultanément si nécessaire, chaque poste devant être alimenté avec une pression différente. On reconnaît sur la figure 2 le fait que l'on alimente à partir du stockage 10 trois ensembles du type de celui de la figure 1 grâce à trois lignes parallèles, alimentant trois bains (20/21/22) dans lesquels est immergé un échangeur thermique, en passant par une vanne d'alimentation **1₁**, **1₂**, **1₃**, chaque bain est muni de son système de contrôle du niveau du bain, chaque ensemble est muni de son système de régulation de la pression parvenant à la vanne **5₁**, **5₂**, **5₃**, et de sa ligne de mise en froid rapide de la portion immergée jusqu'à la vanne **5₁**, **5₂, 5₃.**

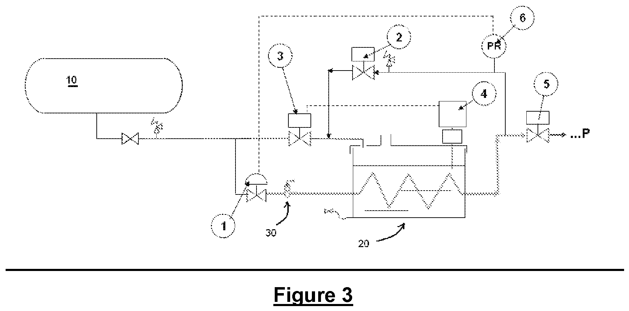

La figure 3 illustre donc un mode de réalisation de l'invention qui met en oeuvre un purgeur en aval de la vanne de régulation 1 (entre la vanne et le bain 20). La figure 3 reprend la figure 1, un purgeur 30 ayant été positionné entre la vanne 1 et le bain 20.

Bien entendu un tel purgeur peut être présent dans tout ou partie des lignes d'une installation multi-lignes telle que celle de la figure 2, donc sur tout ou partie des portions de lignes **1₁**-20, **1₂**-21, **1₃**-22..i.e des portions de ligne entre la vanne d'arrivée de cryogène dans l'échangeur considéré de la ligne considérée et cet échangeur.

## Revendications

1. Installation d'alimentation en liquide cryogénique sous-refroidi d'au moins un poste (P, P1, P2...) réalisant des opérations d'usinage, comportant un réservoir (10) de stockage, réservoir qui contient, sous une pression de stockage supérieure à la pression atmosphérique, le fluide cryogénique en phase liquide au fond du réservoir et en phase gazeuse au sommet du réservoir, ledit réservoir étant adapté pour alimenter ledit poste (P, P1, P2...) n liquide soutiré à partir du fond du réservoir (10), ainsi que pour être approvisionné depuis l'extérieur en fluide, et comprenant:
- au moins un échangeur thermique, immergé dans au moins un bain dudit liquide cryogénique (20),
- des moyens de contrôle (3, 4) du niveau du ou de chaque bain à un niveau déterminé ;
- un système de canalisations apte à faire transiter par le ou chaque échangeur thermique du liquide cryogénique en provenance du réservoir (10) de stockage avant son arrivée audit (s) poste(s) d'usinage ;
- des moyens permettant de réguler (1, 6, 1**₁**, 1**₂**, 6**₁**, 6**₂**...) la pression du liquide cryogénique issu du ou de chaque échangeur immergé avant son arrivée audit poste d'usinage lui correspondant ;
- une vanne (1, 1**₁**, 1**₂**,) située en amont de l'arrivée de liquide dans chacun desdits échangeurs, chaque vanne étant en communication de fluide avec ledit réservoir,
**caractérisée en ce que** lesdits moyens permettant de réguler la pression du liquide cryogénique issu du ou de chaque échangeur immergé avant son arrivée audit poste d'usinage lui correspondant comprennent une sonde de pression (6, 6**₁**, 6**₂**...) dédiée, positionnée entre la sortie de chaque échangeur et ledit poste d'usinage (P, P1, P2..) associé à l'échangeur considéré, et configurée pour fournir l'information qu'elle mesure à ladite vanne (1, 1**₁**, 1**₂**,) située en amont de l'arrivée de liquide dans l'échangeur considéré.

2. Installation selon la revendication 1, **caractérisée en ce qu'**elle comprend une ou plusieurs lignes de mise en froid, une ligne de mise en froid étant dédiée à chacun desdits ensembles de l'installation constitués d'un bain et d'un échangeur, chaque ligne de mise en froid étant connectée en sa partie amont à une canalisation de sortie de l'échangeur du bain qui lui est associé, et en sa partie aval à une canalisation d'alimentation du bain considéré en liquide cryogénique à partir dudit réservoir (10) ou directement sur la partie haute d'un conteneur contenant le bain considéré, chaque ligne de mise en froid étant munie d'une sonde de température et d'une vanne (2) de régulation du débit qui y circule.

3. Installation selon la revendication 1 ou 2, **caractérisée en ce qu'**elle comprend un purgeur (30) sur l'une ou sur tout ou partie des portions de ligne entre une vanne (1, 1₁, 1₂, 1₃) et l'arrivée de liquide dans l'échangeur associé à la vanne considérée.

## Patentansprüche

1. Anlage zur Versorgung mindestens einer Station (P, P1, P2...), die Bearbeitungsvorgänge durchführt, mit unterkühlter kryogener Flüssigkeit, einen Lagerbehälter (10) beinhaltend, Behälter, der das kryogene Fluid, unter einem Lagerdruck, der höher ist als der atmosphärische Druck, in flüssiger Phase am Boden des Behälters und in gasförmiger Phase an der Oberseite des Behälter enthält, wobei der Behälter angepasst ist, um die Station (P, P1, P2...) mit Flüssigkeit, die vom Boden des Behälters (10) ausgehend entnommen wird, zu versorgen, und auch um von der Außenseite mit Fluid beliefert zu werden, und umfassend:
- mindestens einen Wärmeaustauscher, der in mindestens einem Bad der kryogenen Flüssigkeit (20) eingetaucht ist,
- Steuermittel (3, 4) des Pegels des oder jedes Bads auf einen vorbestimmten Pegel;
- ein Rohrleitungssystem, das imstande ist, durch den oder jeden Wärmeaustauscher kryogene Flüssigkeit, die aus dem Lagerbehälter (10) kommt, vor ihrer Zufuhr zu der (den) Bearbeitungsstation(en) durchströmen zu lassen;
- Mittel, die es erlauben, den Druck der kryogenen Flüssigkeit, die aus dem oder jedem eingetauchten Austauscher stammt, vor ihrer Zufuhr zur Bearbeitungsstation, die ihr entspricht, zu regulieren (1, 6, 1₁, 1₂, 6₁, 6₂...);
- ein Ventil (1, 1₁, 1₂,), das stromaufwärts der Flüssigkeitszufuhr in jedem der Austauscher gelegen ist, wobei jedes Ventil in Fluidkommunikation mit dem Behälter ist,
**dadurch gekennzeichnet, dass**
die Mittel, die es erlauben, den Druck der kryogenen Flüssigkeit, die aus dem oder jedem eingetauchten Austauscher stammt, vor ihrer Zufuhr zur Bearbeitungsstation, die ihr entspricht, zu regulieren umfassen
einen zugewiesenen Drucksensor (6, 6₁, 6₂...), der zwischen dem Ausgang jedes Austauschers und der Bearbeitungsstation (P, P1, P2..), die dem Austauscher zugeordnet ist, positioniert ist und konfiguriert ist, um die Information, die er misst, dem Ventil (1, 1₁, 1₂,) bereitzustellen, das stromaufwärts der Flüssigkeitszufuhr im betrachteten Austauscher gelegen ist.

2. Anlage nach Anspruch 1, **dadurch gekennzeichnet, dass** sie eine oder mehrere Kaltstellungsleitungen umfasst, wobei eine Kaltstellungsleitung jeder der Anlagenanordnungen, die aus einem Bad und einem Austauscher bestehen, zugewiesen ist, wobei jede Kaltstellungsleitung in ihrem stromaufwärtigen Teil mit einer Ausgangsrohrleitung des Austauschers des Bads verbunden ist, der ihr zugeordnet ist, und in ihrem stromabwärtigen Teil mit einer Versorgungsrohrleitung des betrachteten Bads mit kryogener Flüssigkeit aus dem Behälter (10) oder direkt auf dem oberen Teil eines Behältnisses, das das betrachtete Bad enthält, wobei jede Kaltstellungsleitung mit einem Temperatursensor und einem Ventil (2) zum Regulieren des Durchflusses, der dort zirkuliert, versehen ist.

3. Anlage nach Anspruch 1 oder 2, **dadurch gekennzeichnet, dass** sie einen Ablasshahn (30) auf dem einen oder auf der Gesamtheit oder einem Teil der Leitungsabschnitte zwischen einem Ventil (1, 1₁, 1₂ 1₃) und der Flüssigkeitszufuhr im zugeordneten Austauscher am betrachteten Ventil umfasst.

## Claims

1. Facility for supplying subcooled cryogenic liquid to at least one station (P, P1, P2...) carrying out machining operations, comprising a storage tank (10), tank which contains, under a storage pressure greater than atmospheric pressure, the cryogenic fluid in the liquid phase at the bottom of the tank and in the gaseous phase at the top of the tank, said tank being suitable for supplying said station (P, P1, P2...) with liquid drawn from the bottom of the tank (10), as well as for being provided with fluid from the outside, and comprising
- at least one heat exchanger, submerged in at least one pool of said cryogenic liquid (20),
- means for controlling (3, 4) the level of the or each pool at a predefined level;
- a system of pipelines capable of passing through the or each heat exchanger cryogenic liquid coming from the storage tank (10) before the arrival thereof at said machining station(s);
- means making it possible to regulate (1, 6, 1₁, 1₂, 6₁, 6₂...) the pressure of the cryogenic liquid from the or each submerged exchanger before the arrival thereof at said corresponding machining station;
- a valve (1, 1₁, 1₂) located upstream of the arrival of liquid in each one of said exchangers, with each valve being in fluidic communication with said tank,
**characterised in that** said means that make it possible to regulate the pressure of the cryogenic liquid coming from the or each submerged exchanger before the arrival thereof at said corresponding machining station comprise a dedicated pressure sensor (6, 6₁, 6₂...), positioned between the outlet of each exchanger and said machining station (P, P1, P2..) associated with the exchanger considered, and configured to provide the information that it measures to said valve (1, 1₁, 1₂,) located upstream of the arrival of the liquid in the exchanger considered.

2. Facility according to claim 1, **characterised in that** it comprises one or more cooling lines, with a cooling line being dedicated to each one of said assemblies of the facility formed from a pool and an exchanger, with each cooling line being connected at the upstream portion thereof to an outlet pipeline of the exchanger of the pool with which it is associated, and at the downstream portion thereof to a supply pipeline of the pool considered with cryogenic liquid from said tank (10) or directly on the top portion of a container that contains the pool considered, with each cooling line being provided with a temperature sensor and a valve (2) for regulating the flow rate that circulates therein.

3. Facility according to claim 1 or 2, **characterised in that** it comprises a bleeder (30) on one or on all or part of the line portions between a valve (1, 1₁, 1₂, 1₃) and the arrival of liquid in the exchanger associated with the valve considered.
